# EUROPÄISCHE PATENTSCHRIFT

(11) **EP 0 489 025 B1**
(45) Veröffentlichungstag und Bekanntmachung des Hinweises auf die Patenterteilung: **12.10.1994**
(21) Anmeldenummer: 90910653.6
(22) Anmeldetag: 30.07.1990
(51) Int. Cl.: B61D 17/22, B60D 5/00, B62D 47/02

(54) **GELENKFAHRZEUG MIT EINEM FALTENBALG ZWISCHEN DEN FAHRZEUGTEILEN**
ARTICULATED VEHICLE WITH A BELLOWS-TYPE CONNECTION BETWEEN THE DIFFERENT PARTS OF THE VEHICLE
VEHICULE ARTICULE AVEC SOUFFLET ENTRE LES PARTIES DU VEHICULE

(30) Priorität: 23.08.1989 DE 8910106 U; 17.11.1989 DE 3938281
(43) Veröffentlichungstag der Anmeldung: 10.06.1992
(73) Patentinhaber: HÜBNER Gummi- und Kunststoff GmbH, D-34123 Kassel (DE)
(72) Erfinder: GUMPERT, Horst, J., D-3320 Salzgitter 1 (DE); KOCH, Robert, D-3437 Bad Sooden-Allendorf (DE)
(74) Vertreter: Walter, Helmut, Dipl.-Ing.
(86) Internationale Anmeldenummer: EP9001241
(87) Internationale Veröffentlichungsnummer: WO9102672

(56) Entgegenhaltungen:
- EP-A- 0 122 956
- DE-A- 1 207 220
- DE-A- 3 340 446
- DE-B- 1 222 382
- DE-C- 595 383
- GB-A- 2 016 380

## Beschreibung

Die Erfindung betrifft ein Gelenkfahrzeug mit einem Faltenbalg zwischen den Fahrzeugteilen, der einen Mittelrahmen enthält, der von dem Gelenk quer verschiebbar getragen ist.

Bei Schienen- und Straßenfahrzeugen, deren Fahrzeugteile über ein Gelenk mit vertikaler Drehachse verbunden sind, ist es bekannt, über dem Gelenk eine begehbare Drehplattform anzuordnen und den Durchgang von einem Fahrzeugteil zum anderen durch einen Faltenbalg zu schützen. Wenn der Abstand zwischen den Stirnflächen der Fahrzeugteile für einen selbsttragenden Balg zu groß ist, enthält er einen Mittelrahmen, der von einem Mittelbügel getragen ist, der mit dem Gelenk verbunden ist. Bei Geradeausfahrt befindet sich die Mittellinie des Faltenbalgs über dem Drehzentrum des Gelenks. Wenn jedoch bei Kurvenfahrt die Form des Faltenbalgs einem Kreisbogen oder einer Biegelinie folgen soll, liegt seine Mittellinie auf der Kurveninnenseite seitab von dem Drehzentrum. Das bedeutet, daß der Mittelrahmen querbeweglich mit dem Gelenk verbunden sein muß. Bei Straßenfahrzeugen verzichtet man in der Regel auf die Querbeweglichkeit, weil die Steuerung des Mittelrahmens zu aufwendig ist.

Der Erfindung liegt die Aufgabe zugrunde, ein Gelenkfahrzeug der eingangs genannten Art zu schaffen, dessen Mittelrahmenanordnung trotz Querbeweglichkeit wenig aufwendig ist und daher auch bei Straßenfahrzeugen Anwendung finden kann. Ferner wird eine vertikal kompakte Bauweise des Gelenks sowie der den Faltenbalg tragenden Einrichtung und der Wegfall von Dachaufbauten für die Mittelrahmenführung angestrebt.

Die erfindungsgemäße Lösung besteht in den Merkmalen des kennzeichnenden Teils des Anspruchs 1.

Wenn der Stab starr ist, gibt er eine geradlinige Verbindung zwischen seinen Verbindungsstellen mit den Fahrzeugstirnseiten vor und damit eine im wesentlichen geradlinige Form des Faltenbalgs. Bevorzugt wird eine gekrümmte Form, die man nach der Erfindung dadurch erreichen kann, daß der Stab federnd biegbar ist und an wenigstens einem der beiden Fahrzeugteile, vorzugsweise aber an beiden, in Längsrichtung winkelfest angeordnet ist. Das bedeutet, daß der Stab aus den Stirnflächen der beiden Fahrzeugteile jeweils in Längsrichtung austritt und sich dazwischen gemäß einer Biegelinie verformt, die dann auch die entsprechende Biegelinie für den Faltenbalg vorgibt. Die Form der Biegelinie kann durch geeignete Querschnittsgestaltung des Stabs beeinflußt werden. Wenngleich es im allgemeinen ausreicht, einen Stab konstanten Querschnitts zu wählen, dessen Biegelinie einen nicht konstanten Krümmungsradius aufweist, ist es auch möglich, durch entsprechende Querschnittswahl gewünschtenfalls eine Biegelinie mit im wesentlichen konstantem Radius zu erzielen.

Wenn der Biegestab mit beiden Fahrzeugteilen längsbeweglich verbunden ist, kann er mit dem Mittelrahmen längsfest verbunden sein. Stattdessen ist es aber auch möglich, den Mittelrahmen längsverschiebbar mit dem Biegestab zu verbinden oder durch andere, bekannte Mittel nötigenfalls dafür zu sorgen, daß er die Mittelstellung zwischen den beiden Fahrzeugstirnflächen einhält.

Die Verbindung des Mittelrahmens mit dem Biegestab erfolgt zweckmäßigerweise winkelfest so, daß er lotrecht zur Richtung des Biegestabs in der Befestigungsstelle verläuft. Auf diese Weise ist sichergestellt, daß er - in bezug auf die Vertikalachse des Gelenks - etwa in Richtung der Winkelhalbierenden liegt. Stattdessen kann bei minderen Anforderungen auch vorgesehen sein, daß der Mittelrahmen stets parallel zu einer der Stirnflächen der beiden Fahrzeugteile bleibt oder sich unter der Einwirkung der Längsfederkraft des Faltenbalgs frei einstellt.

Es können mehrere derartige Stäbe vorgesehen sein, beispielsweise oben und unten (zweckmäßigerweise unterhalb des Gelenks). Es können mehrere Stäbe in gleicher Höhe, beispielsweise paarig, angeordnet sein. Möglich ist es auch, lediglich einen Biegestab oben zu verwenden, während unten andere Vorrichtungen zur Steuerung der Seitenbewegung des Mittelbügels verwendet werden.

Der Stab kann nicht nur zur Steuerung der Seitenbewegung des Mittelrahmens, sondern auch zum Tragen des Mittelrahmens sowie ggf. des Balgs zwischen dem Mittelrahmen und den Fahrzeugteilen herangezogen werden. Da die Biegsamkeit des Stabes häufiger in der Horizontalebene erforderlich ist und einen weit größeren Knickwinkel benötigt als in der Vertikalebene, kann sein Querschnitt so ausgebildet sein, daß dem Gewicht des Balges Rechnung getragen wird. Der Querschnitt des Stabes kann oval oder blattförmig ausgebildet sein.

Der den Mittelrahmen tragende Mittelbügel wird zweckmäßigerweise - wie an sich bekannt - von dem Gelenk gestützt, das erfindungsgemäß als Drehkranz ausgebildet ist, der außer zwei mit den Fahrzeugteilen jeweils verbundenen Drehringen einen weiteren Drehring enthält, der den Mittelrahmen trägt. Dadurch kommt man zu einer in Vertikalrichtung kompakten Bauweise. Auch vermeidet man dadurch das üblicherweise zum Befestigen des Mittelbügels vorgesehene Kugelgelenk, wie z.B. im Dokument DE-A-1 222 382, das die Querbeweglichkeit des Mittelbügels infrage stellen könnte. Letzteres gilt jedenfalls dann, wenn der Mittelbügel gemäß der Erfindung gegenüber dem Drehkranz querbeweglich ist. Nach einer anderen Lösung kann ein Mittelteil des Mittelbügels querfest mit dem Gelenk verbunden sein, wahrend Seitenteile des Mittelbügels querbeweglich von dem Mittelteil geführt sind.

Die Enden des Mittelbügels sollen nachgiebig mit dem Mittelrahmen verbunden sein, beispielsweise über Torsionsgelenke, damit sich der Mittelrahmen auch in bezug auf die Querachse in Richtung der Winkelhalbierenden zwischen den Stirnflächen der Fahrzeugteile einstellen kann. Dies sowie die eben erläuterte Anordnung des Mittelbügels am Drehkranz verdienen ggf. Schutz unabhängig von der Steuerung der Querbewegung des Mittelrahmens durch den die Fahrzeugteile verbindenden Stab.

Zum Führen des Mittelrahmens in der Winkelhalbierenden kann eine Steuermechanik vorgesehen sein, die zwei jeweils mit dem einen bzw. dem anderen Fahrzeugteil verbundene Steuerstangen umfaßt, die über einen Ausgleichshebel auf den Mittelrahmen einwirken, indem sie jeweils mit einem Ende des zweiarmigen Ausgleichshebels verbunden sind, dessen Mitte drehbar am Mittelrahmen gelagert ist. Die Steuerstangen werden zu diesem Zweck in gleicher Höhe und in gleichem seitlichem Abstand und Längsabstand mit den Fahrzeugteilen verbunden. Zweckmäßig ist es dabei, keine unmittelbare Verbindung mit den Stirnflächen der Fahrzeugteile zu wählen, sondern eine mittelbare Verbindung, nämlich über die vorderen und hinteren Hälften der Drehplattform, die jeweils mit dem einen bzw. dem anderen Fahrzeugteil hinsichtlich der Schwenkbewegung um die Gelenk-Querachse verbunden sind. Um hinreichende Relativbeweglichkeit und Freiheit von übermäßigen Kraftspitzen zu gewährleisten, ist das Mittellager des Ausgleichshebels zweckmäßigerweise an einer Stütze angeordnet, deren oberes Ende über ein in Querrichtung bewegliches Verschiebelager mit dem Mittelrahmen und deren unteres Ende über ein um die Querachse bewegliches Schwenklager mit dem Mittelbügel verbunden ist.

Die Erfindung wird im folgenden näher unter Bezugnahme auf die Zeichnung erläutert, die vorteilhafte Ausführungsbeispiele schematisch darstellt. Es zeigen:
- Fig. 1: eine schematische Längsschnittdarstellung durch den Verbindungsbereich zweier Fahrzeugteile,
- Fig. 2: einen Teilquerschnitt eines Drehkranzes,
- Fig. 3: einen Querschnitt durch die Ausführung gemaß Fig. 1,
- Fig. 4: einen Horizontalschnitt durch die Ausführung gemäß Fig. 3,
- Fig. 5 bis 7: eine abgewandelte Vorrichtung zur Steuerung der Stellung des Mittelrahmens,
- Fig. 8 und 9: zwei Varianten der Fig. 3,
- Fig. 10: den Querschnitt einer Mittelbügelkonstruktion,
- Fig. 11 und 12: die Draufsicht auf eine Biegestabanordnung und
- Fig. 13 und 14: Seitenansichten von Biegestabanordnungen,
- Fig. 15: in perspektivischer Darstellung den Bereich zwischen den beiden miteinander gekuppelten Fahrzeugteilen, wobei insbesondere dargestellt sind das Drehgelenk, der Mittelbügel und eine besondere Ausbildung der oberen, seitenverschieblichen Führung des Mittelbügels mit zwei Blattfederpaaren,
- Fig. 16: eine Verbindung des Drehgelenks mit einem Rahmenteil (7) des nachlaufenden Fahrzeugteils (2) gemäß Fig. 15 in größerer Darstellung,
- Fig. 17: eine weitere erfindungsgemäße Ausbildung der oberen Lagerung des Mittelbügels in der Seitenansicht, die insbesondere der Stabilisierung der Brenn- und Anfahrkräfte des Balges über eine obere Stabführung dient,
- Fig. 18: in einer Figur 17 entsprechenden Darstellung nochmals eine weitere Ausbildung der oberen Aufhängung des Balgmittelbügels,
- Fig. 19: eine erfindungsgemäß ausgebildete Abdeckung des erfindungsgemäßen Drehgelenks,
- Fig. 20: eine Einzelheit der Ausbildung der Dämpfung der Bewegungen zwischen den einzelnen Teilen eines erfindungsgemäßen Drehgelenks in der Draufsicht,
- Fig. 21: eine Variante für die Dämpfung der Bewegungen zwischen den einzelnen Teilen eines erfindungsgemäßen Drehgelenks als horizontaler Teilschnitt durch das Drehgelenk,
- Fig. 22: als Querschnitt einen erfindungsgemäßen Biegestab in einer Ausgestaltung, die ihn besonders kerbfest macht,
- Fig. 23: einen Querschnitt durch ein erfindungsgemäßes Drehgelenk in einer nochmals abgewandelten Ausführung und
- Fig. 24: einen Längsschnitt durch den Drehteller zwischen dem Fußboden von vorderem und hinterem Fahrzeugteil, wobei der Drehteller gemäß einer weiteren Ausbildung ausgeführt und gelagert ist.

Die Fahrzeugteile 1 und 2, bei denen es sich um Vorderwagen und Nachläufer eines Gelenkomnibusses handeln kann, sind durch ein Drehgelenk 3 miteinander verbunden, das einen Drehkranz 4 umfaßt, dessen äußerer Ring 5 seitlich angeformte Horizontallager 6 zur Verbindung mit einem Rahmenteil 7 des Fahrzeugteils 2 aufweist und dessen weiter innen liegender Ring 8 mit einem Rahmenteil 9 des Fahrzeugteils 1 starr verbunden ist. Wie bekannt, haben die Fahrzeugteile 1 und 2 dadurch die Möglichkeit einer Schwenkung um die Vertikalachse 10 sowie um eine Querachse 11. Der Drehkranz 4 ist durch einen dritten, inneren Drehring 14 ergänzt, der den Mittelbügel 15 sowie die aus den zwei Hälften 16 und 17 bestehende Drehplattform trägt. Die Drehplattformhälften 16, 17 sind durch die Scharniere 18 um eine parallel zur Querachse verlaufende Achse schwenkbar und auf Rahmenteilen abgestützt, die fest mit den Fahrzeugteilen 1 bzw. 2 verbunden sind.

Der Mittelbügel 15 trägt über Torsionsgelenke 19 den Mittelrahmen 20. Der den Zwischenraum zwischen den Stirnflächen 13 der Fahrzeugteile 1, 2 überbrückende Balg 12 ist in zwei Hälften aufgeteilt, die einerseits an den Fahrzeugstirnflächen 13 und andererseits an dem Mittelrahmen gestützt und geführt sind.

Der Querträger 15 ist an dem dritten Drehkranzring 14 zweckmäßigerweise fest angeschraubt. Der Zentrumsbereich des Drehkranzes bleibt dadurch für die Aufhängung und Durchführung anderer Bauteile frei, und es ergibt sich eine sehr flache Bauweise.

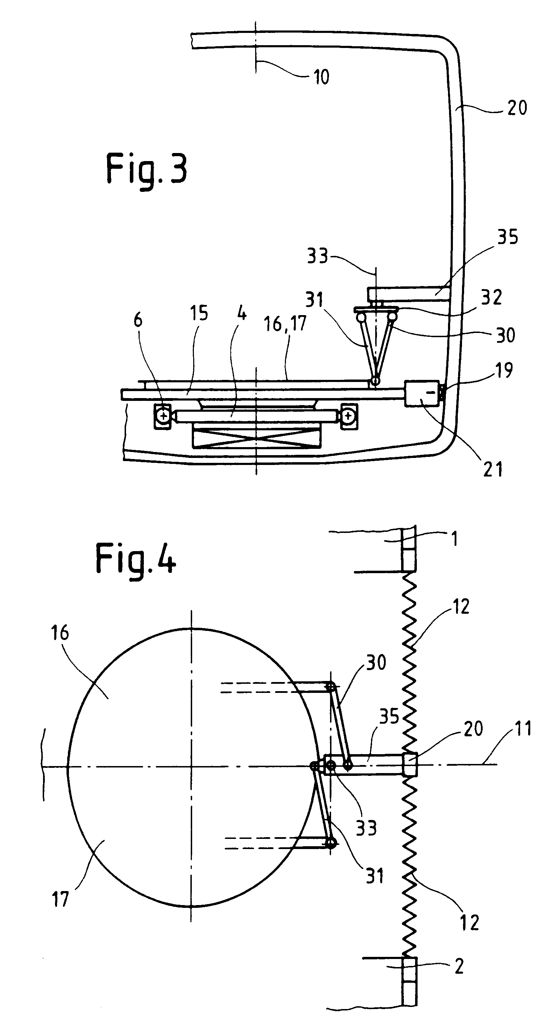

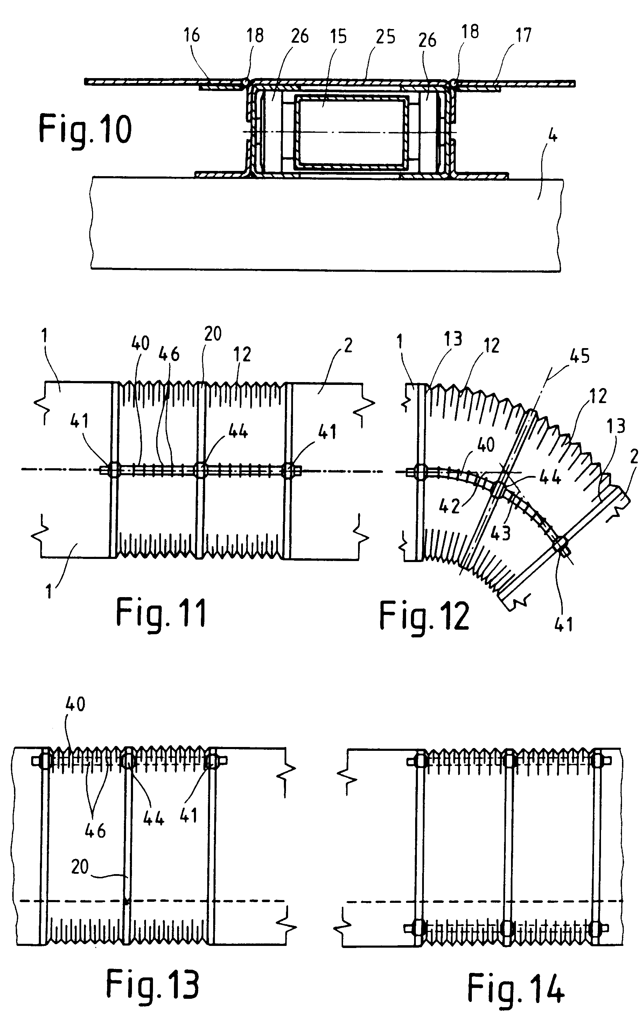

Die erfindungsgemäße Querverschiebung des Mittelrahmens wird in der Ausführung gemäß Fig. 3,4,8 und 9 durch ein Verschiebelager 21 ermöglicht, das an den beiden Enden des Mittelbügels 15 vorgesehen ist und dessen Verbindung mit dem Mittelrahmen (über das Torsionslager 19) bewirkt. Stattdessen kann auch die Anordnung nach Fig. 10 gewählt werden, bei der an dem Drehkranz 4 (genauer: mit dem inneren Drehkranzring 14) eine Querführung 25 fest angeordnet ist, an der die Plattformhälften 16,17 befestigt sind und in der der Mittelbügel 15 mittels Rollen 26 insgesamt verschiebbar ist.

Es kann eine bekannte und deshalb hier nicht dargestellte und beschriebene Vorrichtung vorgesehen sein, die den Mittelbügel in bezug auf die Hochachse 10 stets auf die Winkelhalbierende zwischen den Stirnflächen 13 einstellt.

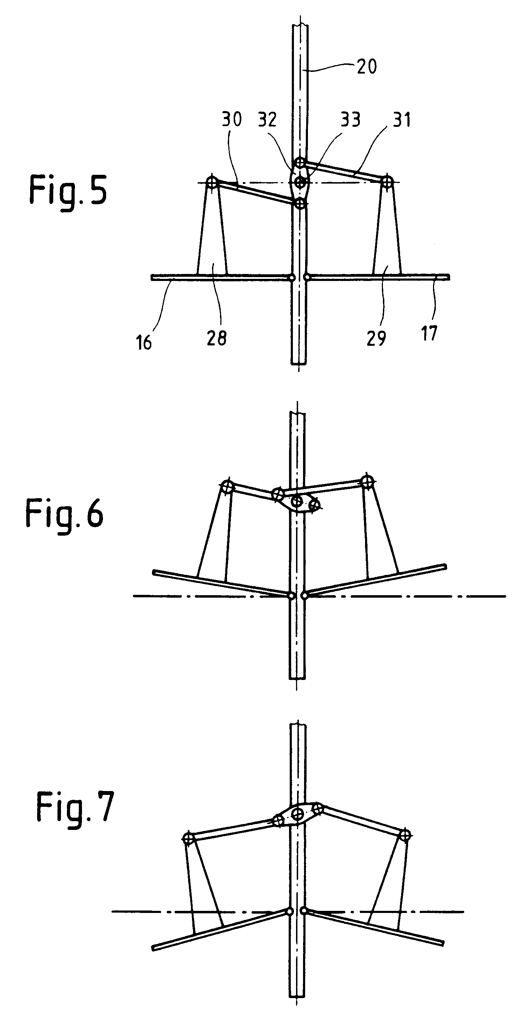

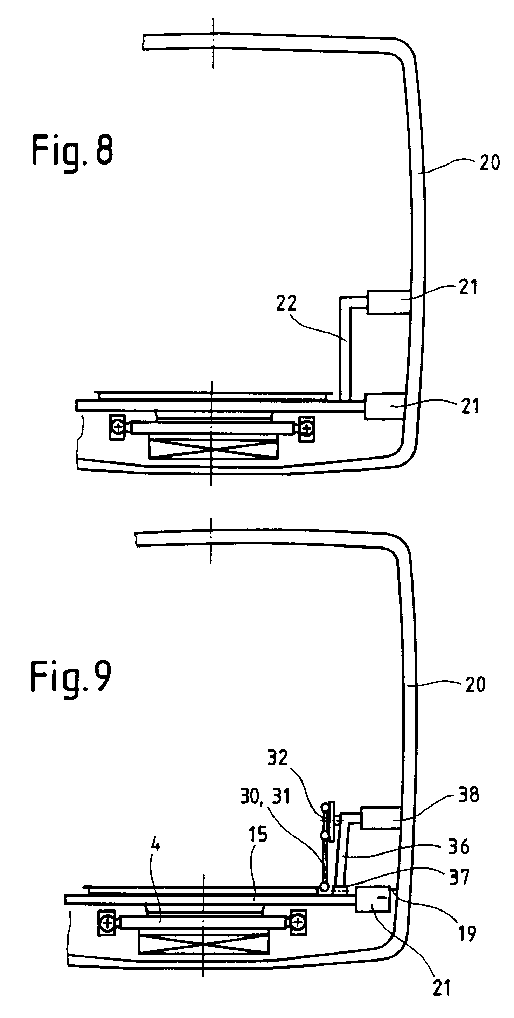

Eine Führung des Mittelrahmens ist auch im Hinblick auf Relativbewegungen der Fahrzeugteile um die Querachse erforderlich. In einfachen Fällen wird die Vertikalachse des Mittelbügels einfach parallel zur Stirnfläche eines der beiden Fahrzeugteile gehalten. In Fig. 8 ist angenommen, daß der Mittelbügel 15 in bezug auf die Querachse drehfest mit dem Drehkranz 4 verbunden ist und daß der Mittelbügel über zwei Verschiebelager 21 auf den Mittelrahmen 20 einwirkt. Dadurch erhält der Mittelrahmen in bezug auf die Querachse dieselbe Winkelstellung wie der Mittelbügel 15 und das Drehgelenk 4, d.h. der Mittelrahmen wird beständig parallel zum Fahrzeugteil 1 gehalten. Bevorzugt wird jedoch eine Vorrichtung, die auch relativ zur Querachse 11 eine Einstellung auf die Winkelhalbierende vornimmt. Eine solche Vorrichtung ist in den Fig. 5 bis 7 dargestellt.

Mit den vorderen und hinteren Hälften 16,17 der Drehplattform sind aufrechtstehende Streben 28,29 starr verbunden.

Sie folgen daher gemäß Fig. 6 und 7 der Nickbewegung der Fahrzeugteile. Mit den oberen Enden der Streben 28, 29 sind Steuerstangen 30,31 gelenkig verbunden, deren andere Enden gelenkig an den Enden eines Doppelhebels 32 angreifen, dessen Mitte an dem Mittelrahmen 20 oder einem damit fest verbundenen Teil über Lager 33 fest verbunden ist. Die Anordnung hat die in den Fig. 6 und 7 veranschaulichte Wirkung, daß auch bei Relativbewegungen um die Querachse des Gelenks der Mittelrahmen 20 stets in Richtung der Winkelhalbierenden zwischen den Stirnflächen 13 gehalten wird.

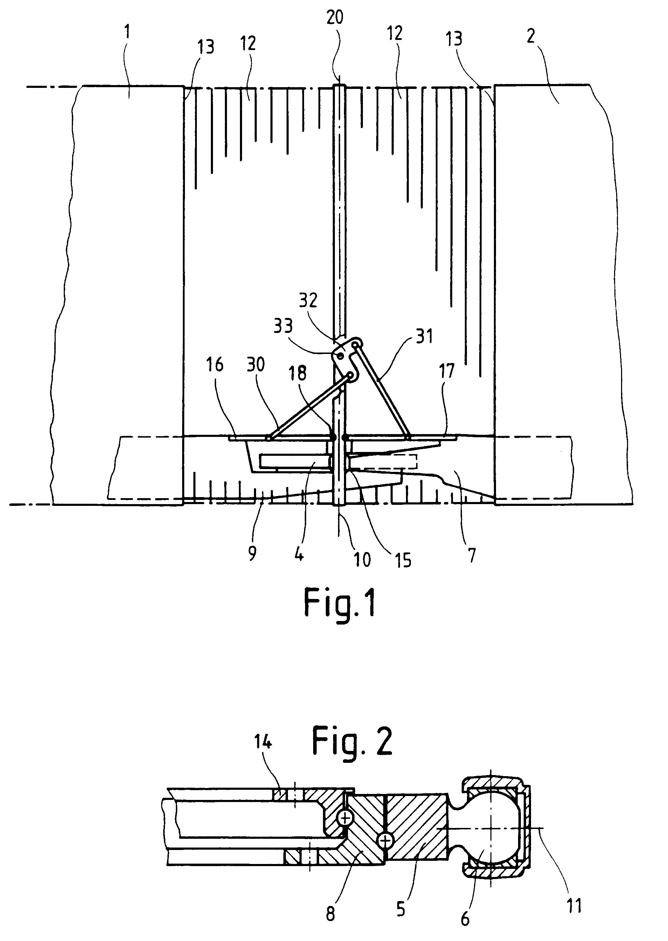

Da die Stützen 28,29 nur die Relativbewegung der beiden Fahrzeugteile repräsentieren, könnten die Enden der Steuerstangen 30,31 auch mit anderen Teilen verbunden sein, die ihrerseits mit den Fahrzeugteilen verbunden sind. Es ist deshalb auch möglich, die Enden der Steuerstangen 30, 31 ohne die Streben 28,29 unmittelbar mit den Plattformhälften 16,17 oder mit damit verbundenen Teilen zu verbinden, wie dies in Fig. 1,3,4 und 9 vorgesehen ist.

Es ist ohne weiteres erkennbar, daß es auf die Lage der Schwenkachse 33 nicht ankommt. Sie braucht nicht horizontal angeordnet zu sein, wie dies in den Fig. 1, 5 bis 7 und 9 angenommen ist, sondern kann auch gemäß Fig. 3 und 4 vertikal stehen.

Das Schwenklager 33 des Ausgleichshebels 32 kann starr unmittelbar oder mittelbar (über Teil 35, Fig. 3 und 4) mit dem Mittelrahmen 20 verbunden sein. Hingegen zeigt Fig. 9 eine Alternativausführung, bei der die Vorrichtung auf eine Zwischenstütze 36 wirkt, die mit dem Mittelbügel 15 über ein Querscharnier 37 verbunden ist und auf den Mittelrahmen 20 über ein Verschiebelager 38 wirkt, das zwar Relativbewegungen in Querrichtung zuläßt, aber zur Kraftübertragung in Längs- und Vertikalrichtung geeignet ist.

Die Steuermechanik 30,32 kann in einfacher Ausführung einseitig oder auch in zweifacher Ausführung beidseitig der Plattform vorgesehen sein. Sie kann sowohl über als auch unter der Drehplattform liegen.

Die Steuerung der Querbewegung des Mittelbügels kann mittels bekannter, nicht dargestellter Vorrichtungen erfolgen. Besonders zweckmäßig ist jedoch die Verwendung des in Fig. 11 bis 14 gezeigten Biegestabs 40, dessen Enden in Verschiebelagern 41 längsverschieblich sind, die starr in den Stirnflächen 13 der Fahrzeugteile 1,2 angeordnet sind. Mit der Stabmitte ist bei 44 der Mittelrahmen 20 winkelfest und zweckmäßigerweise auch längsfest verbunden. Wenn gemäß Fig. 12 eine Schwenkbewegung zwischen den Fahrzeugteilen um die quer zur Zeichenebene stehende Vertikalachse erfolgt, werden zwar die Enden des Biegestabs in Richtung der Längsachsen 42,43 der Fahrzeugteile 1 und 2 festgehalten, biegt sich aber der Stab im übrigen entsprechend der gewünschten Biegelinie, wobei sich seine Verbindung 44 mit dem Mittelrahmen entsprechend seitlich verlagert. Da der Mittelrahmen somit entsprechend der Biegelinie des Biegestabs 40 verlagert wird, kann auch der Balg 12 eine entsprechend günstige Biegelinie annehmen.

Gemäß Fig. 13 befindet sich eine solche Stabanordnung lediglich im oberen Bereich des Balgs 12, und zwar in einfacher, mittiger Ausführung, wie sie in den Fig. 11 und 12 vorausgesetzt ist, oder mehrfach, beispielsweise paarig. Fig. 14 sieht solche Stabanordnungen sowohl oben als auch unten vor. Möglich ist es auch, lediglich unten eine Stabanordnung in einfacher oder mehrfacher Anordnung vorzusehen.

Die einzelnen Balgfalten sind mit Führungsstellen 46 verbunden, die frei auf dem Stab 40 gleiten. Der Balg wird dadurch auch zwischen den Stirnflächen der Fahrzeugteile und dem Mittelrahmen 20 von dem Stab 40 getragen.

Fig. 11 und 12 lassen offen, wie das Verschiebelager 41 ausgeführt ist, da sie je ein Ende des Stabes parallel zu sich selbst hält. Es kann sich beispielsweise um ein Gleit- oder Wälzlager handeln. Es kann auch eine andere Führung gewählt werden, beispielsweise mittels Parallelogrammlenkern, an denen das Stabende befestigt ist.

Die Erfindung läßt gewisse Toleranzen bezüglich der Abweichung der Richtung der Stabenden von der Längsrichtung der zugehörigen Fahrzeugteile zu. Die Abweichung der Führungsqualität von der idealen Biegelinie kann dabei geringer wiegen als der Vorteil, daß dem Stab eine weniger starke Biegung abverlangt wird und die Querverschiebung ggf. erst bei Winkelabweichungen zwischen den beiden Fahrzeugteilen einsetzt, die ein gewisses Mindestmaß überschreiten.

Wie aus Fig. 12 erkennbar, bewirkt die Stabanordnung die Einstellung des Mittelrahmens auf die Winkelhalbierende 45 zwischen den Stirnflächen 13 der Fahrzeugteile 1,2. Dieselbe Wirkung kann auch in bezug auf die Querachse erreicht werden, wodurch die unter Bezugnahme auf Fig. 5 bis 7 erläuterte Anordnung gegebenenfalls entfallen kann.

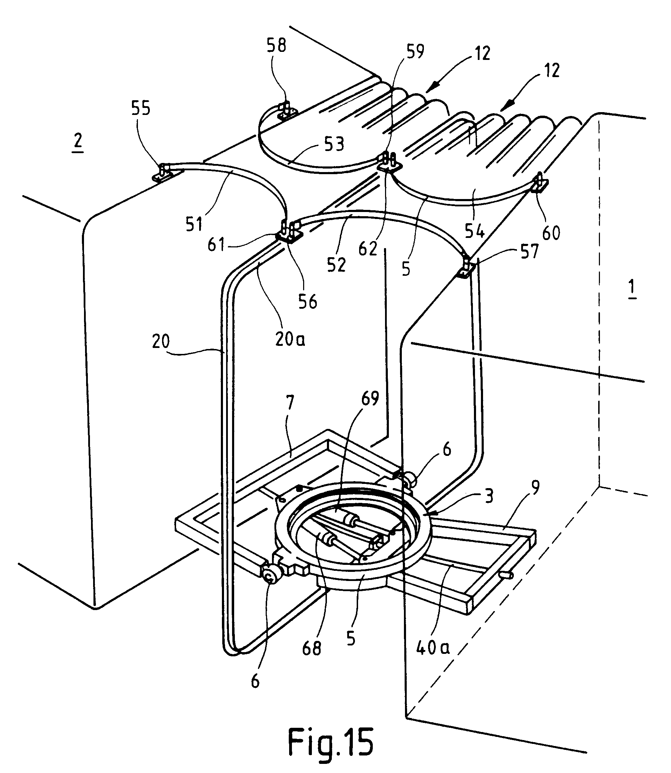

In Fig. 15 ist eine besonders zweckmäßige mehrfache, paarweise Stabanordnung dargestellt, wobei eine paarweise Stabanordnung sowohl oben als auch unten vorgesehen sein kann, hier aber nur eine obere solche Stabanordnung vorgesehen ist. Jeder der Stäbe 51 bis 54 hat den Querschnitt eines vertikal stehenden Rechtecks und jeder der Stäbe ist in Querrichtung des aus Vorderwagen 1 und Nachläufer 2 bestehende Gelenkomnibusses elastisch verformbar, also als quer wirkende Blattfeder ausgebildet. Die Blattfedern 51 bis 54 sind einerseits paarweise zu beiden Seiten der lotrechten Fahrzeuglängsmittelebene (bei Geradeausfahrt des Gelenkomnibusses), andererseits paarweise zu beiden Seiten der lotrechten Fahrzeugquerebene in der Mitte zwischen den beiden Fahrzeugteilen 1,2 (wiederum bei Geradeausfahrt des Gelenkomnibusses) angeordnet, in der sich der Mittelrahmen 20 befindet, der die beiden Teilbälge 12 an den einander zugewandten Enden miteinander verbindet, die an den einander abgekehrten Enden an je einem der beiden Fahrzeugteile 1,2 befestigt sind. Wiederum die Geradeausfahrt des Gelenkomnibusses vorausgesetzt liegen die Anlenkpunkte 55 bis 60 der vier Blattfedern zu je vieren in einer lotrechten Fahrzeuglängsebene, wobei die beiden Fahrzeuglähngsebenen symmetrisch zu der vorerwähnten Fahrzeuglängsmittelebene verlaufen. Von diesen Anlenkpunkten aus sind die Blattfedern bogenförmig symmetrisch zur Fahrzeuglängsmittelebene hin gebogen. Die den Fahrzeugteilen 1,2 zugekehrten Blattfederenden sind mit Federaugen auf vertikalen Zapfen des Fahrzeugteils 1 bzw. des Fahrzeugteils 2 gelagert, während die dem Mittelrahmen 20 zugekehrten Enden mit entsprechenden Federaugen auf vertikalen Zapfen des Mittelrahmens 20 sitzen, wobei die beiden Zapfen in je einer vertikalen Fahrzeuglängsmittelebene auf einer gemeinsamen Platte 61 bzw. 62 gehalten sind, die ihrerseits dem Mittelrahmen 20 fest zugeordnet sind und in der obigen Zählweise paarweise als jeweils einer der Anlenkpunkte gezählt sind. Der Mittelrahmen 20 ist auch bei dieser Anordnung ringsum geschlossen, der obere Querträger 20a trägt die vorerwähnten Lagerpunkte 56,59 bzw 61,62 und der zu ihm parallel verlaufende untere Querträger 20b verläuft unterhalb des Drehgelenks mit den drei Drehkranzringen 5,8 und 14, ohne jedoch mit dem Drehgelenk verbunden zu sein. Die vorbeschriebene Anordnung der Blattfedern 51 bis 54 kann, wie in Fig. 15 vorausgesetzt, nur im Bereich des Faltenbalgdaches 12a über diesem oder aber auch unterhalb des Faltenbalgdaches vorgesehen sein oder es kann eine gleiche Blattfederanordnung oder eine andere Führung auch im Bereich des Faltenbalgbodens über oder unter diesem vorgesehen sein. In Fig. 15 ist eine untere Führung vorgesehen, die als mittlerer Stab 40a entsprechend dem Stab 40 in Fig. 11 ausgebildet ist. Es hat sich gezeigt, daß mit dieser relativ einfachen, kostengünstigen und auf Dauer betriebssicheren oberen Anordnung gegebenenfalls in Verbindung mit der unteren Stabführung 40a eine für den praktischen Betrieb ausreichend genauer Querführung des Mittelrahmens 20 bei Geradeausfahrt und bei Kurvenfahrt des Gelenkomnibusses gewährleistet werden kann.

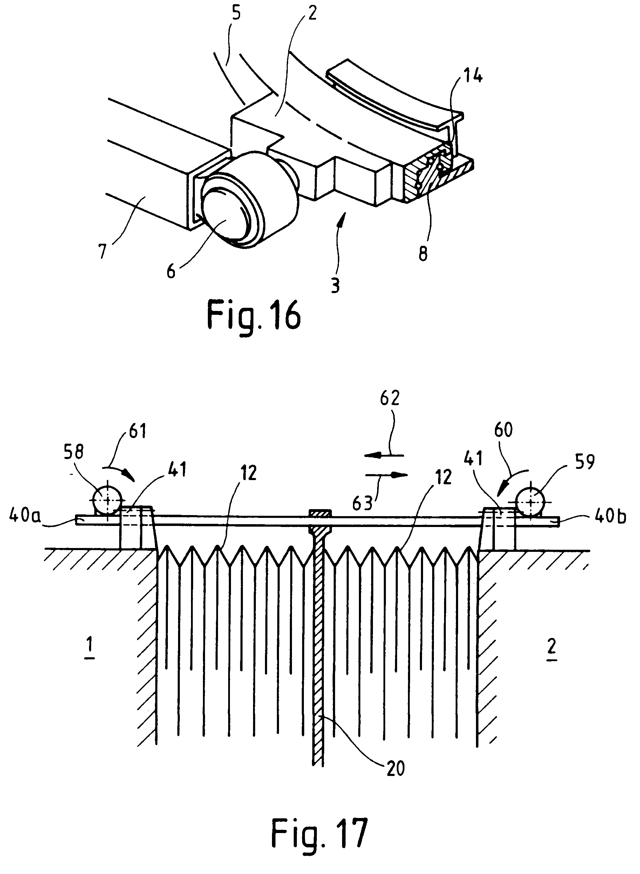

Zum besseren Verständnis ist in Fig. 16 das Drehgelenk 3 nochmals als Ausschnitt dargestellt, wobei wiederum dem äußeren Ring 5 die seitlich angeformten Horizontallager 6 zur Verbindung mit einem Rahmenteil 7 des Nachläufers 2 zugeordnet sind, der weiter innen liegende Ring 8 mit einem Rahmenteil 9 des Vorderwagens 1 verbunden ist und das Drehgelenk 3 bzw. der Drehkranz 4 durch einen dritten, inneren Drehring 14 ergänzt ist, der der Auflage der aus zwei Hälften bestehenden Plattform 16,17 dient.

Findet zur oberen Seitenführung des Mittelrahmens 20 gemäß Fig. 11,12 ein einziger Biegestab 40 in der vertikalen Längsmittelebene des geradeaus fahrenden Gelenkomnibusses Anwendung oder finden zwei solcher geraden oberen Biegestäbe symmetrisch zur vorerwähnten Längsmittelebene Anwendung, wobei in beiden Fällen eine Stabbefestigung am oberen Querträger 20a des Mittelrahmens 20 und eine längsverschiebliche Lagerung an den Fahrzeugteilen 1,2 erfolgt, so können die Lagerungen an den Fahrzeugteilen 1,2 so ausgebildet sein, daß eine Stabilisierung der Brems- bzw. Anfahrkräfte des Balges über die oberen Stabführungen erfolgt. Die den Fahrzeugteilen 1,2 zugeordneten Federstabenden sind als Zahnstangen 40a, 40b ausgebildet und in den Verschiebelagern 41 geführt und auSerhalb der Verschiebelager 41 zum Zusammenwirken mit Zahnrädern 58,59 gebracht (Fig. 17). Neigen die beiden Fahrzeugteile 1,2 zum Einknicken um eine Querachse zwischen beiden Fahrzeugen, so werden die beiden Zahnräder 58,59 zu gegenläufigen Drehbewegungen in Richtung der Pfeile 60,61 gebracht, bei entgegengesetzten Knickbewegungen zu entgegengesetzten Drehbewegungen. Beim Anfahren in Pfeilrichtung 62 erfolgte gleiche Drehbewegung beider Zahnräder in Richtung des Pfeiles 60, während beim Bremsen in Richtung des Pfeiles 63 gleiche Drehbewegungen beider Zahnräder in Richtung des Pfeiles 61 erfolgen. Damit der Faltenbalg 12,12 mit dem Mittelbügel 20 bei Fahrzuständen Anfahren oder Bremsen nicht aus der Mittelposition schwingt, ist vorgesehen, daß die Bewegungsrichtung beider Zahnräder 58,59 verglichen wird. Liegen gegenläufige Bewegungsrichtungen vor, erfolgt keine Bewegungsarretierung. Werden dagegen gegenläufige Bewegungsrichtungen der Zahnräder 58,59 festgestellt, die ein Anfahren des Gelenkbusses anzeigen, so wird das dem Vorderwagen 1 zugeordnete Stabende blockiert, indem die Bewegungsmöglichkeit dieses Stabendes unmittelbar blockiert wird, oder das zugehörige Zahnrad an einer weiteren Drehbewegung gehindert wird. Entsprechendes gilt beim Bremsen bezüglich des dem Nachläufer 2 zugeordneten Stabendes. Das von den Zahnrädern ausgelöste Signal bewirkt das Einfallen einer zweckgerichtet wirkenden Bremse.

Die Ausbildung als Zahnstangengetriebe ist nur beispielhaft, gegebenenfalls kann ein Reibradgetriebe preiswürdiger anzuwenden sein, in seiner Genauigkeit aber ausreichen und den Vorteil haben, daß die Bewegungen der beiden Fahrzeugteile gegeneinander weniger behindert werden.

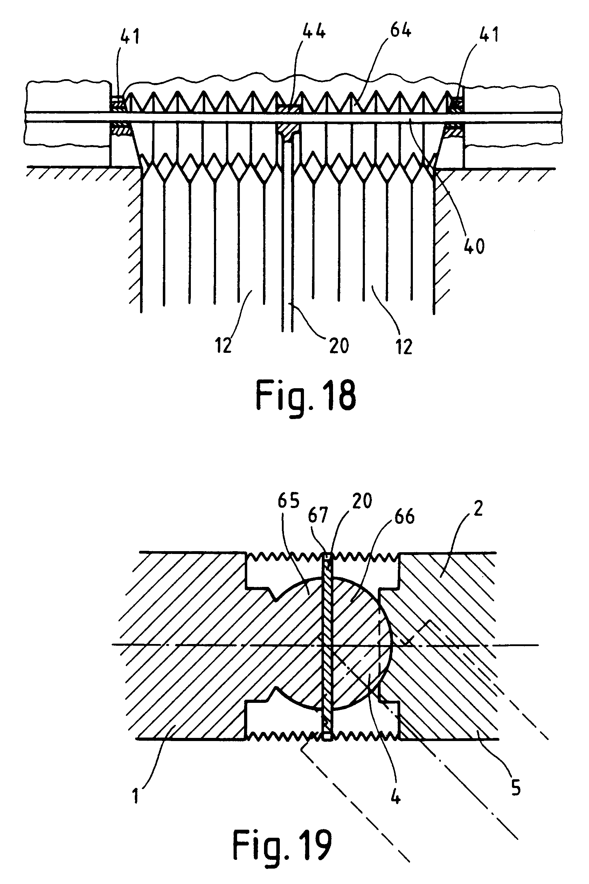

Um die Faltenbalgführung auf dem Stab 40 gemäß Fig. 11,12 mittels Ringen 46, die am Faltenbalg 12 befestigt und auf dem Stab 40 aufgefädelt sind, zu verbessern bzw. genauer zu machen, kann gemäß Fig. 18 der Stab 40 in einen Schaumstoffkörper 64 eingebettet werden, der als Feder wirkt und die Falten des Faltenbalges auf Distanz hält. Er hüllt zu diesem Zweck den Federstab 40 ein und hält die äußeren Rinnen des Faltenbalges zumindest im Dachbereich in ihrer Kontur bzw. bringt sie nach einer Konturveränderung in die Ausgangskontur zurück.

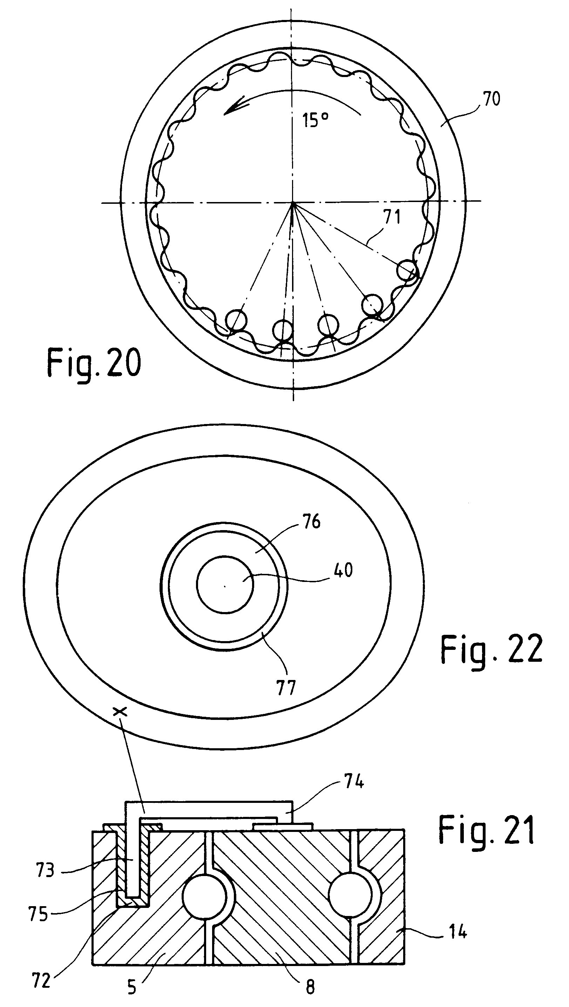

Um das Sitzplatzangebot bei einem Niederfluromnibus zu vergrößern, kann es zweckmäßig sein, den Bereich des Drehgelenks so auszugestalten, daß auch dort eine Bestuhlung aufgestellt werden kann (Fig. 19). Dabei wird der Fußboden des Vorderwagens 1 oder des Nachläufers 2 bis zur Mitte zwischen den beiden geradeaus fahrenden Fahrzeugteilen verlängert. An diese Verlängerung 65 wird eine halbe Scheibe 66 über eine elastische Verbindung 67 befestigt. Die untere Führung des Mittelbügels 20, beispielsweise der Federstab 40a gemäß Fig. 15, ist unterhalb des Fußbodens angeordnet und bewirkt eine Einstellung auf die Winkelhalbierende.

Der halbe Drehteller macht wie der Fußboden den vollen Winkeleinschlag. Diese Lösung bringt die Vorteile, daß eine zusätzliche Sitzreihe im Bereich des Drehgelenks untergebracht werden kann, eine homogene Fußbodengestaltung möglich ist, eine ansprechende Innenausgestaltung erreicht werden kann und die Herstellungskosten gesenkt werden können.

In noch weiterer Ausgestaltung befaßt sich die Erfindung nochmals mit der Dämpfung der Knickbewegungen zwischen beiden Fahrzeugteilen 1,2 um die vertikale Achse des Drehgelenks. Dabei wird die durch das Drehgelenk gegebene Möglichkeit genutzt, die Dämpfungsglieder in dem von den Ringen 5, 8 und 14 des Drehgelenks 3 umschlossenen Innenraum ganz oder teilweise anzuordnen. In Fig. 15 sind zwei Dämpfungsglieder paarweise vorzusehen und symmetrisch zu beiden Seiten der vertikalen Längsmittelebene des geradeaus fahrenden Gelenkbusses angeordnet. Die Kolbenstangen beider als an sich bekannte hydraulische Schwingungsdämpfer ausgebildeten Dämpfungsglieder 68,69 sind an ihren äußeren Enden am einen der beiden Drehkränze 5,8 über entsprechende Konsolen angelenkt, während die Zylinder der beiden Dämpfungsglieder 68,69 über Konsolen am anderen der beiden Drehkränze 5,8 angelenkt sind. Es werden so die Drehbewegungen beider Drehkränze relativ zueinander und damit die Knickbewegungen beider Fahrzeugteile relativ zueinander gedämpft, indem sie nur entgegen dem Widerstand der beiden Dämpfungsglieder möglich sind. Diese Lösung kann gemäß Fig. 20 in der Weise im Hinblick auf weitere Bauhöheneinsparung vorteilhaft ausgestaltet werden, daß die Innenseite eines der Drehkränze 5,8 als Gleit bzw. Rollbahn 70 ausgebildet sind, deren Abstand vom Gelenkdrehpunkt sich in Umfangsrichtung so verändert, daS bei Drehbewegungen beider Drehkränze relativ zueinander zumindest ein zwischen beiden Drehkränzen eingebautes Dämpfungsglied 71 verkürzt wird und dabei ein eingestellter Widerstand überwunden werden muß, wobei durch Ausgestaltung der Dämpfungscharakteristik aber auch durch Ausgestaltung der Gleit- bzw. Rollbahn eine progressive Dämpfungswirkung erzielt werden kann. Die Rückführung der Dämpfungsglieder erfolgt durch entsprechend eingebaute Rückstellfedern.

Um die Dämpfung zwischen den beiden Fahrzeugteilen mit Dämpfungsvorrichtungen bewirken zu können, die platzsparend sind, deren Unterbringung bei Einbauverhältnissen möglich ist, die von einem zum anderen Anwendungsfall sehr verschieden sein können, die extrem betriebssicher sind und deren Dämpfungscharakteristik in einfacher Weise während des Betriebes in einem großen Bereich veränderbar ist, empfiehlt sich gemäß einem weiteren Merkmal der Erfindung die Anwendung von Dämpfungseinrichtungen, die mit einer Flüssigkeit arbeiten, deren Viskosität mittels einer gesteuerten elektrischen Hochspannung veränderbar ist (US-PS 2,417,850). Bei einer solchen Dämpfungseinrichtung ist eine geeignete Flüssigkeit durch eine Drossel hindurch zwischen zwei Kammern zu verdrängen. Abweichend von heute allgemein im Einsatz befindlichen Dämpfungseinrichtungen wird aber nicht bei gleichbleibender Viskosität des zu verdrängenden Fluids der Querschnitt der Drossel verändert, wenn die Dämpfungswirkung verändert werden soll, sondern es wird ohne die Notwendigkeit der Veränderung der Drossel die Viskosität der Dämpfungsflüssigkeit von flüssig über gallertartig bis zu praktisch starr und umgekehrt in praktisch beliebiger Häufigkeit verändert. Diese Veränderung der Viskosität wird bewirkt, indem eine an Flüssigkeit angelegte elektrische Hochspannung gesteuert wird.

In Fig. 21 ist demgegenüber eine Möglichkeit der Dämpfung des Drehgelenks und seiner Bewegungen auf elektrischem Weg dargestellt; eine solche Lösung kann in besonderer Weise platzsparend und in hohem Maße in ihrer Wirkung einstellbar sein.

Der äußere Ring 5 des Drehgelenks ist mit einer ringsumlaufenden Nut 72 versehen, in die der weiter innen liegende Ring 8 mit einem hohlzylindrischen Gegenstück 73 eintaucht, das am äußeren Umfang einer horizontalen Scheibe 74 angeformt oder befestigt ist, die am inneren Umfang des Ringes 8 befestigt ist. Die Scheibe 74 liegt so weit oberhalb der Ringe 5,8, daß diese sich ohne Behinderung durch die Scheibe 74 und ohne mechanische Behinderung durch das Gegenstück 73 relativ zueinander drehen und einstellen können. Zwischen dem als Rotor zu sehenden äußeren Ring 5 und dem als Stator zu sehenden Ring 8 wird nun in geeigneter Weise und einstellbar im elektrischen Feld aufgebaut, wozu lediglich eine Magnetplatte 75 dargestellt ist. Das Magnetfeld ist geeignet, die Relativbewegungen zwischen den Ringen 5 und 8 und damit die Knickbewegungen der Fahrzeugteile 1 und 2 relativ zueinander zu dämpfen. Der dritte, noch weitere Innenring sowie die Lager zwischen den Ringen sind schematisch angedeutet.

In Fig. 22 ist schließlich der Biegestab 40 nochmals als Querschnitt dargestellt und in einer Ausgestaltung, die ihn besonders widerstandsfähig gegen Kerbeinwirkungen macht. Er ist insbesondere zur Einzelanordnung oberhalb des Daches eines Faltenbalges gedacht, der querbeweglich ist und zu diesem Zweck den Mittelrahmen 20 aufweist, der oben in seiner Mitte fest mit dem Stab 40 verbunden ist, dessen Enden querfest aber längsverschiebbar in den Lagern 41, also entsprechend Fig. 11 geführt ist. Der eigentliche Biegestab 40 besteht aus GFK (glasfaserverstärktem Kohlenstoff), hat einen kreis- oder scheibenförmigen Querschnitt und ist mit einer Gummischicht 76 umgeben, die ihrerseits mit einer vorbestimmten Vorspannung zwischen dem eigentlichen Biegestab 40 und einem äußeren Hüllrohr 77 angeordnet ist.

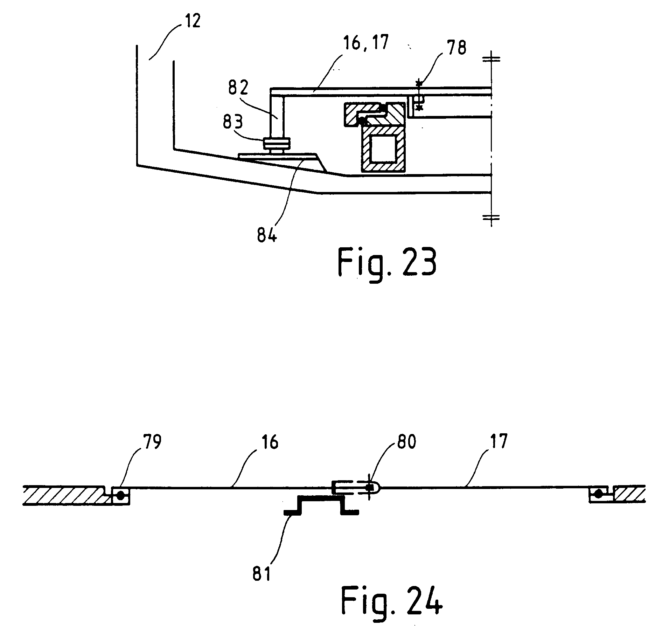

In Figuren 23,24 sind Lösungen offenbart, die wie folgt zu erläutern sind.

Die Drehplattform 16,17 aus Metall oder Kunststoff oder anderen Werkstoffen ist auf einen Ring 78 eines Drehkranzes befestigt. An den Rändern der Drehplattform sind kugel- oder rollengelagerte Teleskopschienen 79 montiert. Diese werden je Seite auf Fußbodenhöhe mit dem Vorderwagen bzw. Nachläufer fest verbunden. Durch diese Befestigungsart wird verhindert, daß die Drehplattform auf seitlichen Stützflächen reibt und an den Rändern in überlappten Aufnahmen scheuert. Damit werden Geräusche verhindert und der Verschleiß vermieden.

Die Drehplattform erhält quer zur Fahrtrichtung oberhalb des Gelenkpunktes der Anlenkung des Nachläufers nur ein elastisches Gelenk 80. Dieses Gelenk ist in der Lage, einen vertikalen Einschlag zu machen und erlaubt in horizontaler Ebene Zug- und Schubbewegung. Dieses Gelenk ist wartungs- und geräuschfrei.

Bei der Vorrichtung zur Stabilisierung des Balges ist an dem Befestigungsträger 81 für die Drehplattform rechts und links je ein Halter 82 starr angebracht. Der Halter mündet unten am Balg 12 in einem Gelenk 83, welches dem Balg die Möglichkeit bietet, daß dieser bei vertikalem Ein- oder Ausknicken die Winkelhalbierende einhalten kann. Alternativ kann der untere Drehpunkt auch entfallen, wenn der Balg nach einer Seite - am Vorderwagen - oder am Nachläufer - fest geführt wird.

Zwischen Balg und unterem Anlenkpunkt wird je eine Teleskopgleitschiene 84 angebracht, die es dem Balg erlaubt, eine Querverschiebung durchzuführen. Diese Halterung stabilisiert den Balg beim Anfahren und Bremsen sowie bei Beschleunigungen um die Hochachse. Außerdem wird, bedingt durch die erfindungsgemäße Mittelbügelführung, der Drehteller durch diese Verbindung in die Winkelhalbierende bei Kurvenfahrt gelenkt.

Zwischen den Drehringen des Vorderwagens und des Nachläufers können dämpfende Elemente eingebaut werden, die in üblicher Weise Hydraulikstoßdämpfer sind. Durch zwangsweise Beeinflussung dieser Dämpfer von außen können die Bewegungen der Ringe zueinander und damit die Winkelbewegungen zwischen Vorderwagen und Nachläufer verändert werden. In diesem Fall sollten die Hydraulikstoßdämpfer vorzugsweise mit Viskosevariablen Flüssigkeiten arbeiten, d.h. mit Flüssigkeiten, deren Fließeigenschaften elektrisch steuerbar sind.

## Patentansprüche

1. Gelenkfahrzeug (1,2) mit einem als Drehkranz (4) ausgebildeten Gelenk (3) zwischen beiden Fahrzeugteilen, wobei jeweils ein Drehring (5 bzw 8) des Drehgelenks (3) mit einem der beiden Fahrzeugteile (2 bzw 1) verbunden ist und die Drehringe, (5,8) in Umfangsrichtung gegeneinander verstellbar, in vertikaler Richtung gegeneinander abgestützt sind und dem Drehgelenk (3) ein Mittelrahmen eines Faltenbalgs zwischen beiden Fahrzeugteilen (1,2) zugeordnet ist, der in einer oberen Stabführung zwischen beiden Fahrzeugteilen aufgehängt ist, **dadurch gekennzeichnet**, daß der Mittelrahmen (20) im unteren Bereich querbeweglich einem der Drehringe (14) des Drehkranzes (4) zugeordnet ist, und zur Steuerung der Querverschiebung des Mittelrahmens (20) in dessen oberem Bereich die in Querrichtung federnd biegbare Stabführung (40) mit ihren Enden an den Fahrzeugteilen (1,2) längsbeweglich geführt ist und zwischen ihren Enden mit dem Mittelrahmen längsfest verbunden ist.

2. Gelenkfahrzeug nach Anspruch 1, **dadurch gekennzeichnet**, daß der Mittelrahmen (20) im unteren Bereich querbeweglich einem dritten Drehring (14) des Drehkranzes (4) zugeordnet ist, der in Umfangsrichtung frei einstellbar zwei weiteren Drehringen des Drehkranzes (4) zugeordnet ist, von denen je einer einem der beiden Fahrzeugteile zugeordnet ist.

3. Gelenkfahrzeug nach Anspruch 2, **dadurch gekennzeichnet**, daß der Stab einer von mehreren gleichartigen Stäben (40) ist.

4. Gelenkfahrzeug nach einem der Ansprüche 2 und 3, **dadurch gekennzeichnet**, daß der Balg (21,22) zwischen dem Mittelrahmen (20) und den Fahrzeugteilen (1,2) an dem Stab (40) abgestützt ist.

5. Gelenkfahrzeug nach einem der Ansprüche 1 bis 4, **dadurch gekennzeichnet**, daß der Mittelbügel (15) einen unteren Mittelteil, der querfest mit dem dritten Drehring (14) des Drehkranzes verbunden ist, und Seitenteile aufweist, die von dem Mittelteil querbeweglich geführt sind.

6. Gelenkfahrzeug nach einem der Ansprüche 1 bis 5, **dadurch gekennzeichnet**, daß zum Führen des Mittelrahmens (20) in der Winkelhalbierenden eine Steuermechanik vorgesehen ist, die zwei jeweils mit dem einen bzw. dem anderen Fahrzeugteil (1,2) verbundene Steuerstangen (30,31) umfaßt, die auf je einem Ende eines zweiarmigen Ausgleichshebels (32) wirken, dessen Mitte mit dem Mittelrahmen (20) verbunden ist.

7. Gelenkfahrzeug nach Anspruch 6, **dadurch gekennzeichnet**, daß eine Drehplattform vorgesehen ist, deren vordere bzw. hintere Hälfte (16,17) jeweils mit dem vorderen bzw. hinteren Fahrzeugteil (1,2) in bezug auf die Gelenkquerachse (11) verbunden sind und daß die Steuerstangen (30,31) mit den Plattformhälften (16,17) verbunden sind, wobei der Ausgleichshebel (32) von der Plattform entfernt angeordnet ist.

8. Gelenkfahrzeug nach Anspruch 6, **dadurch gekennzeichnet**, daß das Mittellager (33) des Ausgleichshebels (32) an einer Stütze (36) angeordnet ist, deren oberes Ende über ein in Querrichtung bewegliches Verschiebelager (38) mit dem Mittelrahmen (20) und deren unteres Ende über ein um die Querachse (11) bewegliches Schwenklager (37) mit dem Mittelbügel (15) verbunden ist.

9. Gelenkfahrzeug nach Anspruch 1, **dadurch gekennzeichnet**, daß zur Steuerung der Querverschiebung des Mittelrahmens (20) zwei Paar Blattfedern (51-54) vorgesehen sind, die in Fahrzeugquerrichtung biegbar, in vertikaler Richtung steif sind, die jeweils ein Blattfederpaar (51,52;53,54) gleich beabstandet zu beiden Seiten der lotrechten Fahrzeuglängsmittelebene und jeweils ein Blattfederpaar (51,53;52,54) vor und hinter dem Mittelrahmen bilden, die zur lotrechten Fahrzeuglängsmittelebene hin von jedem Federende aus gebogen sind und die an den dem Mittelbügel zugehörigen Enden am Mittelbügel, an den anderen Enden am einen der Fahrzeugteile (1,2) gelagert sind, in dem sie an jedem Ende mit einem Auge auf einem vertikalen Zapfen des Mittelbügels bzw. eines der Fahrzeugteile sitzen.

10. Gelenkfahrzeug nach Anspruch 9, **dadurch gekennzeichnet**, daß die beiden Federn (51,52 bzw. 53,54) auf jeder Seite der lotrechten Fahrzeuglängsmittelebene an den dem Mittelbügel (20) zugehörigen Enden auf je einem vertikalen Zapfen sitzen und die beiden Zapfen auf jeder Seite der lotrechten Fahrzeuglängsmittelebene auf einer gemeinsamen Platte (62) befestigt sind, die ihrerseits fest dem Mittelbügel zugeordnet ist.

11. Gelenkfahrzeug nach einem der Ansprüche 1 bis 10, **dadurch gekennzeichnet**, daß der erste, äußere Drehring (5) des Drehkranzes in zwei koaxial angeordneten Bolzengelenken (6), deren Drehachsen horizontal und bei Geradeausfahrt des Fahrzeugs (1,2) in dessen Querrichtung weisen, an einem bügelförmigen Fahrzeugteil (7) des nachlaufenden Fahrzeugteils (2) gehalten und auf dem zweiten, weiter innen liegenden Drehring (8) abgestützt ist, der an einem bügelförmigen Fahrzeugteil (9) des vorauslaufenden Fahrzeugteils (1) gehalten ist, während der noch weiter innen liegende, dritte Drehring (14) auf dem weiter innen liegenden Drehring (8) abgestützt ist und den Mittelbügel (20) querverschieblich trägt.

12. Gelenkfahrzeug nach Anspruch 2, **dadurch gekennzeichnet**, daß bei Anwendung eines einzigen Stabes (40), der bei Geradeausfahrt des Fahrzeugs in derlotrechten Fahrzeuglängsmittelebene liegt, jedes Stabende als Zahnstange (40a, 40b) ausgebildet ist und jede dieser Zahnstangen mit einem Zahnrad (58,59) des jeweiligen Verschiebelagers (41) zusammenwirkt, um Bremsverzögerungs- und Vortriebsbeschleunigungskräfte aufzunehmen.

13. Gelenkfahrzeug nach Anspruch 12, **gekennzeichnet** durch Sensoren zum Ermitteln der Drehrichtung der Zahnräder, die, abhängig von gleichsinnigen oder entgegengesetzt gerichteten Drehbewegungen der Zahnräder, deren Bewegungen zulassen oder ausgewählt sperren.

14. Gelenkfahrzeug nach einem der Ansprüche 1 bis 13, **dadurch gekennzeichnet**, daß der/jeder Stab (40) zwischen den Gleitlagern (41) an beiden Enden in einer Schaumstoffumhüllung (64) angeordnet ist.

15. Gelenkfahrzeug nach einem der Ansprüche 1 bis 14, **dadurch gekennzeichnet**, daß der Fußboden des vorausfahrenden Fahrzeugteils (1) am hinteren Ende als Scheibenabschnitt (65) ausgebildet ist, der mit einer bei Geradeausfahrt in Fahrzeugquerrichtung weisenden Durchmesserkante etwa in der Mitte des Drehgelenks (4) über diesem liegt, wobei an dieser Durchmesserkante ein diesen Scheibenabschnitt kreisbogenförmig fortsetzender Scheibenabschnitt (66) um ein Gelenk vertikal schwenkbar angelenkt ist, das in einen entsprechenden Ausschnitt im Fußboden des nachlaufenden Fahrzeugteils (2) hineinragt.

16. Gelenkfahrzeug nach einem der Ansprüche 1 bis 15, **dadurch gekennzeichnet**, daß die Drehbewegungen zwischen dem äußeren Drehring (5) und dem weiter innen liegenden Drehring (8) des Drehkranzes (4) zwischen beiden Fahrzeugteilen (1,2) durch Dämpfer gedämpft werden, die innerhalb beider Drehringe (5,8) liegen und sich mit beiden Enden an Nockenbahnen (70) beider Ringe abstützen.

17. Gelenkfahrzeug nach einem der Ansprüche 1 bis 16, **dadurch gekennzeichnet**, daß die Drehbewegungen zwischen dem ersten, äußeren Drehring (5) und dem zweiten, weiter innen liegenden Drehring (8) des Drehkranzes (4) zwischen beiden Fahrzeugteilen (1,2) durch hydraulische Dämpfer gedämpft werden, deren hydraulisches Strömungsmittel eine unter Einsatz einer elektrischen Hochspannung veränderbare Viskosität hat.

18. Gelenkfahrzeug nach einem der Ansprüche 1 bis 15, **dadurch gekennzeichnet**, daß die Drehbewegungen zwischen dem ersten, äußeren Drehring (5) und dem weiter innen liegenden Drehring (8) des Drehkranzes (4) zwischen beiden Fahrzeugteilen (1,2) durch elektrische Mittel gedämpft werden, wozu einer der beiden Ringe mit einer radial außen liegenden zylindrischen Schürze als Stator in eine Ringnut des anderen Ringes als Rotor hineinragt.

19. Gelenkfahrzeug nach einem der Ansprüche 1 bis 18, **dadurch gekennzeichnet**, daß eine Drehplattform (16,17) Verwendung findet, die in Fahrzeugquerrichtung geteilt ist, wobei die beiden Teile (16 und 17) oberhalb des Gelenkpunktes der Anlenkung des hinteren Fahrzeugteils am vorderen Fahrzeugteil durch ein elastisches Gelenk (80) miteinander verbunden sind, das Einschlagbewegungen der beiden Teile der Drehplattform relativ zueinander zuläßt und in horizontaler Ebene Zug- und Schubbewegungen überträgt.

20. Gelenkfahrzeug nach Anspruch 19, **dadurch gekennzeichnet**, daß das elastische Gelenk (80) wartungs- und geräuscharm ist.

21. Gelenkfahrzeug nach einem der Ansprüche 1 bis 20, **dadurch gekennzeichnet**, daß eine Drehplattform (16,17) Verwendung findet, die auf einem Ring (78) eines Drehkranzes befestigt ist und an dessen Rand kugel- oder rollengelagerte Teleskopschienen (79) montiert sind

22. Gelenkfahrzeug nach Anspruch 21, **dadurch gekennzeichnet**, daß die Teleskopschienen (79) je Seite auf Fußbodenhöhe mit dem vorderen und hinteren Fahrzeugteil fest verbunden sind.

23. Gelenkfahrzeug nach einem der Ansprüche 1 bis 22, **dadurch gekennzeichnet**, daß eine Drehplattform (16,17) mit einem in Fahrzeugquerrichtung verlaufenden Befestigungsträger (81) Verwendung findet, an dessen Enden je ein Kalter (82) starr angebracht ist, der unten in einem Gelenk (83) einem Balg (12) zwischen den beiden Fahrzeugteilen zugeordnet ist, wobei die Gelenke bei dem Balg beim vertikalen Ein- und Ausknicken die Möglichkeit geben, sich auf die Winkelhalbierende einzustellen.

24. Gelenkfahrzeug nach Anspruch 23, **dadurch gekennzeichnet**, daß zwischen Balg (12) und unterem Anlenkpunkt eine Teleskopgleitschiene angebracht ist, die es dem Balg erlaubt, eine Querverschiebung durchzuführen und den Balg beim Anfahren und Bremsen sowie bei Beschleunigungen um die Hochachse stabilisiert.

25. Gelenkfahrzeug nach einem der Ansprüche 1 bis 24, **gekennzeichnet** durch Hydraulikdämpfer zwischen den Ringen des Drehgelenks, die gegebenenfalls zwangsweise steuerbar sind und die mit einer Viskose-variablen Flüssigkeit betrieben werden.

## Claims

1. Articulated vehicle (1, 2) having an articulation (3) formed as a rotation ring assembly (4) between the two vehicle parts, one rotation ring (5, 8) of the rotation articulation (3) being connected to each of the two vehicle parts (2, 1) respectively, with the rotation rings (5, 8) being adjustable relative to one another in the peripheral direction and being supported against one another in the vertical direction, and wherein between the two vehicle parts (1, 2) a central frame of a bellows is associated with the rotation articulation (3) and is hung up in an upper rod guide between the two vehicle parts, **characterised in that** the central frame (20) is laterally displaceable in its lower region and is associated with one of the rotation rings (14) of the rotation ring assembly (4), and, for controlling the lateral movement of the central frame (20) in its upper region, the rod guide (40), which is resiliently flexible in the lateral direction, is longitudinally displaceably guided with its ends at the vehicle parts (1, 2) and, between its ends, is longitudinally fixed to the central frame.

2. Articulated vehicle in accordance with claim 1, characterised in that the central frame (20) is laterally displaceable in its lower region and is associated with a third rotation ring (14) of the rotation ring assembly (4), wherein the third rotation ring (14) is freely adjustable relative to the two further rotation rings of the rotation ring assembly (4) of which one is associated with each of the two vehicle parts.

3. Articulated vehicle in accordance with claim 2, characterised in that the rod is one of a plurality of similar rods (40).

4. Articulated vehicle in accordance with one of the claims 2 and 3, characterised in that the bellows (21, 22) between the central frame (20) and the parts of the vehicle (1, 2) are supported at the rod (40).

5. Articulated vehicle in accordance with one of the claims 1 to 4, characterised in that the central hoop (15) comprises a lower central portion which is laterally fixed to the third rotation ring (14) of the rotation ring assembly, and side parts which are laterally displaceably guided by the central portion.

6. Articulated vehicle in accordance with one of the claims 1 to 5, characterised in that a control mechanism is provided for guiding the central frame (20) in the bisecting angle and includes two control rods (30, 31) which are each connected with the one or the other vehicle parts (1, 2), with the two control rods (30, 31) each acting on one end of a twin-armed compensation lever (32), the middle of the compensation lever (32) being connected to the central frame (20).

7. Articulated vehicle in accordance with claim 6, characterised in that a rotation platform is provided, the forward and rear halves of which (16, 17) being connected in relation to the lateral axis (11) of the articulation to the front and rear vehicle parts (1, 2) respectively, and in that the control rods (30, 31) are connected to the platform halves (16, 17) and the compensation lever (32) is arranged remote from the platform.

8. Articulated vehicle in accordance with claim 6, characterised in that the central mounting (33) of the compensation lever (32) is arranged at a support (36), the upper end of which being connected to the central frame (20) via a translation mounting (38) which can be moved in the lateral direction, and the lower end of which being connected to the central hoop (15) via a pivot mounting (37) which can be moved about the lateral axis (11).

9. Articulated vehicle in accordance with claim 1, characterised in that, for controlling the lateral movement of the central frame (20), two pairs of leaf springs (51-54) are provided which are flexible in the direction transverse to the vehicle and stiff in the vertical direction, which each form one leaf spring pair (51, 52; 53, 54) equally spaced from either side of the vertical vehicle longitudinal central plane and each form one leaf spring pair (51, 53; 52, 54) in front of and behind the central frame which are bent towards the vertical vehicle longitudinal central plane from each end of the spring and which are mounted at the central hoop at the ends associated with the central hoop and are mounted at the other ends at one of the vehicle parts (1, 2), and which sit at either end with an eyelet on a vertical spigot of the central hoop and of the vehicle parts at said ends associated with the central hoop and at said other ends respectively.

10. Articulated vehicle in accordance with claim 9, characterised in that both springs (51, 52 and 53, 54) sit on each side of the vertical vehicle longitudinal central plane at the end associated with the central hoop (20), each on one vertical spigot, and in that the two spigots are secured on a common plate (62) on each side of the vertical vehicle longitudinal central plane, the plate (62) being in fixed association with the central hoop.

11. Articulated vehicle in accordance with one of the claims 1 to 6, characterised in that the first, outer rotation ring (5) of the rotation ring assembly is held at a hoop-like vehicle pan (7) of the rear vehicle part (2) in two coaxially arranged bolt articulations (6), the rotational axes of which point horizontally and, when the vehicle (1, 2) is travelling in a straight line, in the transverse direction of the vehicle, and wherein the first, outer rotation ring (5) is supported on the second rotation ring (8) lying further inwards which is held at a hoop-like part (9) of the front vehicle part (1), while the third rotation ring (14) which lies still further inwards is supported on the rotation ring (8) lying further inwards and carries the central hoop (20) in a transversely displaceable manner.

12. Articulated vehicle in accordance with claim 2, characterised in that, when a single rod (40) which lies in the vertical vehicle longitudinal central plane when the vehicle is travelling in a straight line is used, every rod end is formed as a toothed rod (40a, 40b) and each of these toothed rods cooperate with a toothed wheel (58, 59) of the relevant translation mounting (41) in order to take up braking, deceleration forces and drive acceleration forces.

13. Articulated vehicle in accordance with claim 12, characterised `by sensors for determining the rotational directions of the toothed wheels which, depending on whether the rotational movement of the toothed wheels is directed in the same sense or in the contrary sense, permits or selectively blocks their movement.

14. Articulated vehicle in accordance with one of the claims 1 to 13, characterised in that the/each rod (40) is arranged between the slide mountings (41) at both ends in a foam sleeve (64).

15. Articulated vehicle in accordance with one of the claims 1 to 14, characterised in that the floor of the front vehicle part (1) is formed at the rear end as a disc section (55) and lies with a diametrical edge, which points in the transverse direction of the vehicle when travelling in a straight line, approximately in the middle of and above the rotation articulation (4), wherein a further disc section (56) extends the disc section at this diametrical edge in a circular arched shape and is vertically pivotably hinged about an articulation which protrudes into a corresponding cut-out in the floor of the rear vehicle part.

16. Articulated vehicle in accordance with one of the claims 1 to 15, characterised in that the rotational movements between the outer rotation ring (5) of the rotation ring assembly (4) and the rotation ring (8) of the rotation ring assembly (4) lying further inwards is damped between the two vehicle parts (1, 2) by dampers which lie within the two rotation rings (5, 8) and support themselves with either ends at the cam paths (70) of the two rings.

17. Articulated vehicle in accordance with one of the claims 1 to 16, characterised in that the rotational movements between the first, outer rotation ring (5) of the rotation ring assembly (4) and the second rotation ring (8) of the rotation ring assembly (4) lying further inwards are damped between the two vehicle parts (1, 2) by hydraulic dampers, whose hydraulic fluid has a viscosity which can be changed by the action of a high electric voltage.

18. Articulated vehicle in accordance with one of the claims 1 to 15, characterised in that the rotational movements between the first, outer rotation ring (5) of the rotation ring assembly (4) and the rotation ring (8) of the rotation ring assembly (4) lying further inwards are damped between the two vehicle parts (1, 2) by electrical means, and in that for doing this one of the two rings protrudes with a radially outwardly lying cylindrical apron, which acts as a stator, in a circular groove of the other ring, which acts as a rotor.

19. Articulated vehicle in accordance with one of the claims 1 to 18, characterised in that a rotational platform (16, 17) is used which is divided in the transverse direction of the vehicle, wherein the two parts (16 and 17) are connected at the front vehicle part above the point of articulation of the link of the rear vehicle part via an elastic articulation (80) which allows end-stop movements of both parts of the rotational platform relative to one another and transmits pushing and pulling movement in the horizontal plane.

20. Articulated vehicle in accordance with claim 19, characterised in that the elastic articulation (80) produces little noise and requires little servicing.

21. Articulated vehicle in accordance with one of the claims 1 to 20, characterised in that a rotational platform (16, 17) is used with is secured on a ring (78) of a rotation ring assembly, and in that ball-bearing or roller-bearing telescopic rails (79) are mounted at the edge of the ring.

22. Articulated vehicle in accordance with claim 21, characterised in that the telescopic rails (79) are fixed on each side at floor height to the front and rear vehicle parts.

23. Articulated vehicle in accordance with one of the claims 1 to 22, characterised in that a rotational platform (16, 17) with a securing carrier (81) extending in the transverse direction of the vehicle is used and at each end of which a holder (22) is rigidly mounted which, underneath in an articulation (83), is associated with a bellows (12) between the two parts of the vehicle, wherein, during vertical inflexing and outflexing, the articulations at the bellows allow the possibility of adjusting themselves to the bisecting angle.

24. Articulated vehicle in accordance with claim 23, characterised in that a telescopic slide rail is mounted between the bellows (12) and the lower hinge point, the telescope slide rail allowing the bellows to perform a lateral movement and stabilising the bellows about the high axis when driving off, braking and accelerating.

25. Articulated vehicle in accordance with one of the claims 1 to 24, characterised by hydraulic dampers between the rings of the rotation articulation which are, if present, automatically controllable and operable with a viscosity-variable liquid.

## Revendications

1. Véhicule articulé (1, 2) comprenant une articulation (3) réalisée sous la forme d'une couronne de pivotement (4) entre deux parties du véhicule, un anneau tournant (5 ou 8) de l'articulation tournante (3) étant respectivement relié à l'une des deux parties (2 ou 1) du véhicule, les anneaux tournants (5, 8) pouvant être déplacés l'un par rapport à l'autre dans la direction périphérique, et étant appuyés l'un contre l'autre en direction verticale, un cadre médian d'un soufflet d'intercirculation étant associé à l'articulation tournante (3) entre les deux parties (1, 2) du véhicule, ledit cadre médian étant suspendu dans un guidage à tiges supérieur entre les deux parties du véhicule, caractérisé en ce que le cadre médian (20) est associé dans la région inférieure à l'un des anneaux tournants (14) de la couronne de pivotement (4) et de manière à pouvoir se déplacer transversalement, et en ce qu'en vue du déplacement transversal du cadre médian (20) dans sa région supérieure, le guidage à tiges (40), capable de fléchir élastiquement en direction transversale, est guidé en déplacement longitudinal par ses extrémités sur les parties (1, 2) du véhicule, et est relié fixement dans le sens longitudinal entre ses extrémités au cadre médian.

2. Véhicule articulé selon la revendication 1, caractérisé en ce que le cadre médian (20) est associé, dans la région inférieure et avec faculté de se déplacer transversalement, a un troisième anneau tournant (14) de la couronne de pivotement (4), ledit troisième anneau tournant étant associé, de manière à pouvoir être réglé librement en direction circonférentielle, à deux autres anneaux tournants de la couronne de pivotement (4), chacun de ces anneaux tournants étant associés à l'une des deux parties respectives du véhicule.

3. Véhicule articulé selon la revendication 2, caractérisé en ce que la tige est l'une de plusieurs tiges de même type (40).

4. Véhicule articulé selon l'une ou l'autre des revendications 2 et 3, caractérisé en ce que le soufflet (21, 22) entre le cadre médian (20) et les parties (1, 2) du véhicule est appuyé sur la tige (40).

5. Véhicule articulé selon l'une quelconque des revendications 1 à 4, caractérisé en ce que l'arceau central (15) comporte une partie centrale inférieure, qui est reliée fixement dans le sens transversal au troisième anneau tournant (14) de la couronne de pivotement, et des parties latérales, qui sont guidées mobiles en direction transversale par la partie centrale.

6. Véhicule articulé selon l'une quelconque des revendications 1 à 5, caractérisé en ce qu'il est prévu pour le guidage du cadre médian (20) dans la bissectrice de l'angle un mécanisme de commande, ce mécanisme de commande comportant deux tiges de commande (30, 31) reliées respectivement à l'une ou à l'autre des parties (1, 2) du véhicule, lesdites tiges de commande agissant chacune sur une extrémité d'un levier de compensation (32) à deux bras, dont le centre est relié au cadre médian (20).

7. Véhicule articulé selon la revendication 6, caractérisé en ce qu'il est prévu une plate-forme tournante, dont les moitiés avant et arrière respectives (16, 17) sont reliées respectivement à la partie avant ou à la partie arrière (1, 2) du véhicule, par rapport à l'axe transversal (11) de l'articulation, et en ce que les tiges de commande (30, 31) sont reliées aux moitiés (16, 17) de la plate-forme, le levier de compensation (32) étant agencé en éloignement de la plate-forme.

8. Véhicule articulé selon la revendication 6, caractérisé en ce que le palier central (33) du levier de compensation (32) est agencé sur un montant (36) dont l'extrémité supérieure est reliée au cadre médian (20) au moyen d'un palier de translation (38) mobile en direction transversale, et dont l'extrémité inférieure est reliée à l'arceau central (15) via un palier pivotant (37) mobile autour de l'axe transversal (11).

9. Véhicule articulé selon la revendication 1, caractérisé en ce qu'il est prévu deux paires de ressorts à lames (51-54) pour la commande du déplacement transversal du cadre médian (20), lesdits ressorts à lames étant flexibles dans la direction transversale du véhicule et étant rigides en direction verticale, qui forment respectivement une paire de ressorts à lames (51, 52 ; 53, 54) situés à une distance égale des deux côtés du plan médian longitudinal vertical du véhicule et qui forment respectivement une paire de ressorts à lames (51, 53 ; 52, 54) devant et derrière le cadre médian, lesdits ressorts à lames étant cintrés depuis chaque extrémité du ressort en direction du plan médian longitudinal vertical du véhicule et étant montés sur l'arceau central à l'extrémité associée à celui-ci, et sur l'une des parties du véhicule (1, 2) à l'autre extrémité, par le fait qu'ils reposent à chaque extrémité au moyen d'un oeillet sur un tenon vertical de l'arceau central, ou respectivement de l'une des parties du véhicule.

10. Véhicule articulé selon la revendication 9, caractérisé en ce que les deux ressorts (51, 52 ; 53, 54) reposent de chaque côté du plan médian longitudinal vertical du véhicule sur un tenon vertical respectif aux extrémités associées à l'arceau central (20), et en ce que les deux tenons de chaque côté du plan médian longitudinal vertical du véhicule sont fixés sur une plaque commune (62) qui est associée de son côté fixement à l'arceau central.

11. Véhicule articulé selon l'une quelconque des revendications 1 à 10, caractérisé en ce que le premier anneau tournant extérieur (5) de la couronne de pivotement est porté sur une partie de véhicule (7) en forme d'arceau de la partie (2) de véhicule suivante, dans deux articulations à broche (6) agencées coaxialement, dont les axes de rotation sont horizontaux et sont dirigés en direction transversale lors du déplacement en ligne droite du véhicule (1, 2), et en ce qu'il est appuyé sur le second anneau de rotation (8), situé plus loin à l'intérieur, qui est retenu sur une partie de véhicule (9) en forme d'arceau de la partie (1) du véhicule située en avant, tandis que le troisième anneau tournant (14), situé encore plus à l'intérieur, est appuyé sur l'anneau tournant (8) situé à l'intérieur, et porte l'arceau central (20) avec possibilité de déplacement transversal.

12. Véhicule articulé selon la revendication 2, caractérisé en ce que lorsqu'on utilise une tige unique (40), qui est située dans le plan médian longitudinal vertical du véhicule lors du déplacement du véhicule en ligne droite, chaque extrémité de la tige est réalisée sous la forme d'une crémaillère (40a, 40b), et en ce que chacune de ces crémaillères coopère avec une roue dentée (58, 59) du palier de translation (41) respectif, afin d'encaisser les forces de ralentissement au freinage et d'accélération à la progression.

13. Véhicule articulé selon la revendication 12, caractérisé en ce qu'il comporte des détecteurs pour détecter la direction de rotation des roues dentées, qui permettent ou bloquent de façon sélective les mouvements des roues dentées, dans la dépendance des mouvements de rotation, dans le même sens ou dans des sens opposés, des roues dentées.

14. Véhicule articulé selon l'une quelconque des revendications 1 à 13, caractérisé en ce que la, ou chaque, tige (40) est agencée entre les paliers coulissant (41) aux deux extrémités dans une enveloppe en mousse (64).

15. Véhicule articulé selon l'une quelconque des revendications 1 à 14, caractérisé en ce que le plancher de la partie (1) du véhicule située en avant est réalisée à l'extrémité arrière sous la forme d'une section de disque (65), telle que lors d'une circulation en ligne droite cette section présente une arête diamétrale dirigée dans la direction transversale du véhicule, à peu près au milieu de l'articulation tournante (4) et au-dessus de celle-ci, une section de disque (66) qui poursuit en forme d'arc de cercle de première section de disque au niveau de cette arête diamétrale, étant articulée de façon à pouvoir basculer verticalement autour d'une articulation, cette articulation pénétrant dans un évidement correspondant dans le plancher de la partie (2) du véhicule située en arrière.

16. Véhicule articulé selon l'une quelconque des revendications 1 à 15, caractérisé en ce que les mouvements de rotation entre la bague tournante extérieure (5) et la bague tournante (8) située plus à l'intérieur de la couronne de pivotement (4) entre les deux parties (1, 2) du véhicule sont amortis par des amortisseurs qui sont situés à l'intérieur des deux anneaux tournants (5, 8) et s'appuient par leurs deux extrémités contre des pistes de cames (70) des deux anneaux.

17. Véhicule articulé selon l'une quelconque des revendications 1 à 16, caractérisé en ce que les mouvements de rotation entre le premier anneau tournant extérieur (5) et le second anneau tournant situé plus à l'intérieur (8) de la couronne de pivotement (4) entre les deux parties (1, 2) du véhicule sont amortis par des amortisseurs hydrauliques, dont le fluide d'écoulement hydraulique présente une viscosité modifiable en utilisant une tension électrique élevée.

18. Véhicule articulé selon l'une quelconque des revendications 1 à 15, caractérisé en ce que les mouvements de rotation entre le premier anneau tournant extérieur (5) et le second anneau tournant situé plus à l'intérieur (8) de la couronne de pivotement (4) entre les deux parties (1, 2) du véhicule, sont amortis par des organes électriques, et à cet effet l'un des deux anneaux, réalisé comme stator avec une jupe cylindrique radiale extérieure, pénètre dans une gorge annulaire de l'autre anneau, réalisé en tant que rotor.

19. Véhicule articulé selon l'une quelconque des revendications 1 à 18, caractérisé en ce qu'on utilise une plate-forme tournante (16, 17) qui est divisée dans la direction transversale du véhicule, les deux parties (16 et 17) étant reliées l'une à l'autre au-dessus du point d'articulation de l'attelage de la partie arrière du véhicule sur la partie avant du véhicule par une articulation élastique (80), qui permet des déplacements de débattement des deux parties de la plate-forme tournante l'une par rapport à l'autre, et qui transmet dans le plan horizontal des déplacements de traction et de poussée.

20. Véhicule articulé selon l'une quelconque des revendications 1 à 19, caractérisé en ce que l'articulation élastique (80) est une articulation à faible maintenance et à faible bruit.

21. Véhicule articulé selon l'une quelconque des revendications 1 à 20, caractérisé en ce qu'on utilise une plate-forme tournante (16, 17) qui est fixée sur un anneau (78) d'une couronne de pivotement, et sur la bordure de laquelle sont montés des rails télescopiques (78) montés sur des billes ou sur des rouleaux.

22. Véhicule articulé selon revendication 21, caractérisé en ce que les rails télescopiques (79) sont reliés fixement sur chaque côté sur la partie avant du véhicule et la partie arrière du véhicule, à la hauteur du plancher.

23. Véhicule articulé selon l'une quelconque des revendications 1 à 22, caractérisé en ce qu'on utilise une plate-forme tournante (16, 17) avec un support de fixation (81) qui s'étend dans la direction transversale du véhicule et à chaque extrémité duquel est monté fixement un support (82), qui est associé, au-dessous dans une articulation (83) à un soufflet (12) entre les deux parties du véhicule, les articulations ménageant la possibilité, lorsque le soufflet se rétracte ou se déploie verticalement, de se mettre en place sur la bissectrice de l'angle.

24. Véhicule articulé selon la revendication 23, caractérisé en ce qu'entre le soufflet (12) et le point d'articulation inférieur est monté un rail coulissant télescopique qui permet au soufflet d'exécuter un déplacement transversal, et qui stabilise le soufflet lors de l'accélération et du freinage, ainsi que dans le cas d'accélération autour de l'axe vertical.

25. Véhicule articulé selon l'une quelconque des revendications 1 à 24, caractérisé en ce qu'il est prévu des amortisseurs hydrauliques entre les anneaux de l'articulation tournante, ces amortisseurs hydrauliques pouvant éventuellement être commandés de façon forcée, et fonctionnant avec un liquide à viscosité variable.
